(19) **Europäisches Patentamt**
**European Patent Office**
**Office européen des brevets**

(11) **EP 1 302 016 B1**

(12) **FASCICULE DE BREVET EUROPEEN**

(45) Date de publication et mention
de la délivrance du brevet:
**08.09.2010 Bulletin 2010/36**

(51) Int Cl.:
*H04L 5/06* (2006.01)          *H04B 7/26* (2006.01)
*H04J 3/06* (2006.01)          *H04L 5/02* (2006.01)

(21) Numéro de dépôt: **00983386.4**

(22) Date de dépôt: **23.11.2000**

(86) Numéro de dépôt international:
**PCT/FR2000/003268**

(87) Numéro de publication internationale:
**WO 2002/007375 (24.01.2002 Gazette 2002/04)**

(54) **SYNCHRONISATION, DANS UNE STATION DE BASE, DE SIGNAUX EMIS PAR PLUSIEURS TERMINAUX, POUR DES SYSTEMES DE COMMUNICATION FDMA**

SYNCHRONISATION DER VON MEHREREN EINHEITEN AUSGESENDETEN SIGNALE IN EINER BASISSTATION, FÜR FDMA-KOMMUNIKATIONSSYSTEME

SYNCHRONISING, IN A BASE STATION, SIGNALS TRANSMITTED BY SEVERAL TERMINALS, FOR FDMA COMMUNICATION SYSTEMS

(84) Etats contractants désignés:
**AT BE CH CY DE DK ES FI FR GB GR IE IT LI LU MC NL PT SE TR**

(30) Priorité: **17.07.2000 FR 0009372**

(43) Date de publication de la demande:
**16.04.2003 Bulletin 2003/16**

(73) Titulaire: **TDF**
**75015 Paris (FR)**

(72) Inventeurs:
• **CALLONNEC, Denis**
  **F-35000 Rennes (FR)**
• **LEMESLE, Jean-Michel**
  **F-35700 Rennes (FR)**
• **BAUDUIN, Jean-Pierre**
  **F-35270 Combourg (FR)**
• **PACE, Daniel**
  **F-35700 Rennes (FR)**

(74) Mandataire: **Vidon, Patrice**
**Cabinet Vidon**
**Technopole Atalante**
**16B Rue de Jouanet**
**BP 90333**
**35703 Rennes Cedex 7 (FR)**

(56) Documents cités:
**EP-A- 0 734 132     US-A- 5 933 454**

• **WAHLQVIST M ET AL: "TIME SYNCHRONIZATION IN THE UPLINK OF AN OFDM SYSTEM" IEEE 46TH VEHICULAR TECHNOLOGY CONFERENCE, vol. CONF. 46, 28 avril 1996 (1996-04-28) - 1 mai 1996 (1996-05-01), pages 1569-1573, XP000595795 NEW YORK, NY, USA ISBN: 0-7803-3158-3**
• **CALLONNEC D ET AL: "Introduction to SFDMA multiple access networks and their possible implementation in terrestrial DVB return channels" IEEE PIMRC '97, 1 - 4 septembre 1997, pages 281-285 vol.2, XP002169734 NEW YORK, NY, USA ISBN: 0-7803-3871-5**

EP 1 302 016 B1

**Description**

Le domaine de l'invention est celui des systèmes de communication mettant en oeuvre des accès multiples par répartition en fréquence (AMRF). Plus précisément, l'invention concerne de tels systèmes dans lesquels des fréquences porteuses émises par plusieurs terminaux (ou, plus généralement, stations émettrices) sont reçues et traitées sous la forme d'un signal unique (multiplex de fréquences porteuses) dans une station de base (ou, plus généralement, station réceptrice).

Un système mettant en oeuvre cette technique est par exemple décrit dans la demande de brevet FR-93 10339. Dans ce système, plusieurs terminaux (appelés stations réparties) se voient affecter une ou plusieurs fréquences porteuses, choisies parmi une pluralité de fréquences porteuses.

Ces fréquences porteuses sont modulées indépendamment dans chaque terminal, et émises de manière synchronisée. On obtient ainsi, vu d'une station de base (appelée station centrale), un multiplex de fréquences porteuses orthogonales, qui peut être traité comme un signal unique, en effectuant une seule opération de démodulation, mettant en oeuvre notamment une transformation mathématique (une FFT par exemple).

Cette technique s'avère particulièrement avantageuse, car chaque terminal n'émet qu'une ou qu'un petit nombre de fréquences porteuses. Ainsi, leur réalisation est relativement simple, et la puissance nécessaire est limitée. De même, la station de base reste relativement simple, car elle ne reçoit qu'un unique signal.

Un domaine particulier de l'invention est celui de la télévision numérique, dans les systèmes prévoyant une voie de retour des récepteurs de télévision vers l'émetteur du signal de télévision. les voies de retour sont connues depuis longtemps, notamment dans le cadre des réseaux de télévision câblés. Elles peuvent être utilisées en particulier pour transmettre des données permettant une interactivité entre l'utilisateur du récepteur et le programme émis (participation à des jeux ou des sondages par exemple).

L'invention peut être appliquée sur toutes les voies de retour (câble, voie hertzienne) basées sur un système AMRF. pour des émetteurs fixes, portables ou mobiles.

Plus généralement, l'invention est applicable dans tous les cas où une communication AMRF est mise en oeuvre, que celle-ci soit une transmission multipoint à point ou point à point, qu'elle soit ou non symétrique.

Ainsi, par exemple, l'invention peut également être mise en oeuvre dans des réseaux locaux reliant une pluralité de stations, chacun d'entre eux jouant le rôle de terminal selon la définition ci-dessus, pour émettre, et de station de base, toujours selon la définition ci-dessus, en réception.

Le système décrit dans la demande de brevet FR-93 10339 déjà citée présente toutefois un inconvénient, à savoir celui de la synchronisation temporelle des différents terminaux.

On conçoit en effet aisément que les temps de propagation des terminaux vers la station de base (et inversement) sont différents, en fonction de la distance les séparant. Si tous les terminaux se synchronisent sur un signal de synchronisation, diffusé par la station de base, et émettent sans précaution supplémentaire, la station de base ne recevra pas un signal unique cohérent, et ne pourra pas assurer la démodulation de toutes les fréquences porteuses.

Pour pallier cet inconvénient, on prévoit un asservissement par une boucle de contre-réaction effectué émetteur par émetteur : la station de base mesure le décalage temporel du signal reçu depuis chaque émetteur et envoie ce décalage, ou une information équivalente à l'émetteur. Ce dernier réajuste son instant d'émission en conséquence, et ainsi de suite jusqu'à obtention d'une bonne compensation des délais de propagation aller/retour entre la station de base et l'émetteur.

Cette technique est décrite dans le document "Time synchronization in the uplink of an OFDM system, "IEEE 46th vehicular technology conference, de wahlquist M et AL. et dans le document US-A-5 933 454 de cioffi John M (1999 -08-03).

Cette méthode présente cependant plusieurs inconvénients.

Tout d'abord, elle conduit à une augmentation de la complexité de chaque terminal d'émission, alors qu'il est souhaitable, dans de nombreuses applications telles que les voies de retour, qu'il soit le plus simple et le moins coûteux possible. De même, le récepteur de la station de base est rendu plus complexe, puisqu'il doit gérer le traitement des décalages.

Le délai nécessaire à cette procédure d'asservissement par contre-réaction est encore un autre inconvénient. En particulier, cette méthode est pratiquement incompatible avec des terminaux mobiles, la procédure devant alors être réitérée de façon quasi permanente.

Une autre solution au problème de la synchronisation temporelle est proposée dans la demande de brevet FR-96 10670. Selon cette approche, la station de base comprend au moins deux chaînes de démodulation parallèles, chacune desdites chaînes de démodulation appliquant notamment sur ledit signal AMRF :

- une fenêtre temporelle de réception de symbole débutant avec un retard de chaîne supérieur ou égal à zéro, par rapport à une référence de synchronisation, lesdits retards de chaîne étant tous différents ; et préférentiellement,
- un filtrage multiporteuse de Nyquist.

Ainsi, selon l'invention, on n'impose pas une synchronisation très précise des terminaux. C'est à la réception que l'on assure une démodulation sélective, en fonction des retards de propagation.

Plus précisément, le signal reçu est considéré, dans son ensemble, avec plusieurs (au moins deux) retards différents. Chaque fréquence porteuse peut donc ainsi, quelque soit son retard, être démodulée correctement dans l'une ou l'autre des chaînes de démodulation.

Un inconvénient de cette technique est que, bien sûr, elle rend plus complexe le traitement à effectuer dans la station de base. En outre, elle nécessite la mise en oeuvre d'une mise en forme (filtrage de type Nyquist) des signaux suffisamment robuste pour réduire l'interférence interporteuse due à la non synchronisation de porteuses adjacentes.

L'invention a notamment pour objectif de pallier ces différents inconvénients de l'état de la technique.

Plus précisément, un objectif de l'invention est de fournir une technique mettant en oeuvre une démodulation efficace et à faible coût d'un signal multiporteuses AMRF constitué par la contribution de plusieurs terminaux distants, qui permettent de s'affranchir d'un asservissement temporel par contre-réaction (synchronisation) entre les terminaux et la station de base.

Ainsi, un objectif de l'invention est de fournir une telle technique, qui ne nécessite pas de moyens et de traitements complexes dans les terminaux, de façon que ceux-ci restent simples et peu coûteux. Notamment, un objectif particulier de l'invention est de fournir une technique ne nécessitant pas la mise en oeuvre d'un filtrage complexe de mise en forme, ou plus généralement de moyens particuliers de lutte contre l'interférence interporteuse.

Encore un autre objectif de l'invention est de fournir une telle technique, qui puisse être mis en oeuvre sur tout type de canal de transmission (câble, transmission hertzienne,...), et pour tout type de terminaux, qu'ils soient fixes, portables ou mobiles.

Ces objectifs ainsi que d'autres qui apparaîtront par la suite, sont atteints à l'aide d'un signal AMRF, formé d'un multiplex de fréquences porteuses émises par au moins deux terminaux distincts et destinées à être traitées sous la forme d'un signal unique dans une station de base. Selon l'invention, ce signal porte des informations de synchronisation temporelle comprenant, pour au moins certains desdits terminaux, une valeur déterministe de phase émise simultanément et en continu sur au moins deux desdites fréquences porteuses, pendant une durée supérieure ou égale à deux temps symbole.

De façon préférentielle, ladite durée vaut $(Ns+1)Ts$, où :

- Ts est la durée d'un symbole dudit signal ;
- Ns est un entier non nul correspondant au nombre de symboles nécessaires pour couvrir un étalement prédéterminé, contre lequel on veut lutter.

Ainsi, selon l'invention, on s'assure que chaque information de synchronisation occupe au moins un temps symbole complet, au niveau de la réception (c'est-à-dire qu'il est entier sur au moins une fenêtre de démodulation). En d'autres termes, on peut toujours, selon l'approche de l'invention, trouver une fenêtre d'analyse commune à l'ensemble des signaux reçus dans laquelle l'information de synchronisation est récupérable, c'est-à-dire dans le sens sans interférence intersymbole sur chaque porteuse (intra porteuse).

Ainsi, lorsque l'invention est appliquée à un signal AMRF robuste (autorisant une certaine interférence multiporteuse), un simple fenêtrage rectangulaire est suffisant.

Avantageusement, ladite durée prédéterminée tient compte d'au moins un des trois étalements suivants ou d'une de leurs combinaisons :

- l'étalement maximal du délai de propagation aller des signaux entre ladite station de base et lesdits terminaux ;
- l'étalement maximal du délai de propagation retour des signaux entre lesdits terminaux et ladite station de base ;
- la latence interne maximale desdits terminaux.

De façon avantageuse, ledit signal comprend, avant et/ou après ladite valeur déterministe, sur la fréquence porteuse concernée, au moins un symbole nul. Préférentiellement, il comprend au moins Ns+1 symboles nuls avant et/ou après ladite valeur déterministe.

Selon un aspect avantageux de l'invention, les fréquences porteuses portant lesdites valeurs déterministes appartiennent à une plage cohérente du canal de transmission dans lequel ledit signal est transmis. Notamment, lesdites fréquences porteuses portant lesdites valeurs déterministes peuvent avantageusement être adjacentes.

Le signal de l'invention peut notamment être modulé selon la technique OFDMA ou la technique SFDMA.

Selon un mode de réalisation particulier de l'invention, lesdites porteuses portent, simultanément à ladite valeur déterministe de phase, des données utiles, sous la forme d'une modulation conservant les propriétés de phase et de mise en forme nécessaires à la synchronisation.

L'invention concerne également les stations de base prévues pour recevoir un signal tel que présenté ci-dessus. Cette station de base comprend avantageusement des moyens de calcul d'une information représentative d'un retard

(éventuellement positif, négatif ou nul) à appliquer par chacun desdits terminaux, à partir d'une analyse desdites valeurs déterministes telles que reçues par ladite station de base, et des moyens de transmission de ladite information représentative d'un retard vers le terminal correspondant.

Selon un mode de réalisation préférentiel de l'invention, lesdits moyens de calcul déterminent la différence de phase entre les fréquences porteuses portant ladite valeur déterministe, et y associe ladite information représentative d'un retard.

Avantageusement, l'association à ladite différence de phase à ladite information représentative d'un retard est réalisé à l'aide d'une table de concordance stockée en mémoire.

Ladite information représentative d'un retard peut par exemple comprendre une valeur angulaire de phase et/ou un retard temporel.

Préférentiellement, la station de base comprend des moyens de levée de l'ambiguïté due à la périodicité de la fonction considérée, par analyse de transitions entre lesdites valeurs déterministes et le symbole nul précédant et/ou suivant entre lesdites valeurs déterministes.

Selon un mode de mise en oeuvre particulier, la station de base comprend des moyens d'émission préalable, vers lesdits terminaux, d'une référence de temps.

L'invention concerne encore les terminaux d'un système d'accès multiples, comprenant des moyens de modulation et de transmission d'au moins deux fréquences porteuses d'un signal tel que présenté ci-dessus.

L'invention concerne également les systèmes d'accès multiples permettant la transmission de données entre une pluralités de terminaux et une station de base, dans lesquels lesdits terminaux et ladite station de base sont conçus pour respectivement générer et recevoir un signal décrit ci-dessus, ainsi que le procédé de synchronisation d'au moins deux terminaux distincts d'un système d'accès multiples, produisant un signal traité comme un tout dans une station de base. Ce procédé comprend notamment une étape d'émission, par lesdits terminaux, et de réception, par ladite station de base, d'un signal tel que présenté ci-dessus.

D'autres caractéristiques et avantages de l'invention apparaîtront clairement à la lecture de la description suivante d'un mode de réalisation préférentiel, donné à titre de simple exemple illustratif et non limitatif, et des dessins annexés, parmi lesquels :

- la figure 1 présente l'environnement spatial station de base-terminaux-usager dans un système d'accès multiple selon l'invention ;
- la figure 2 illustre l'espace temps-fréquence d'un récepteur d'un système AMRF tel que présenté en figure 1 ;
- le figure 3 est un exemple de signal comprenant des informations de synchronisation temporelle selon l'invention ;
- le figure 4 illustre la réception, dans une station de base, de deux signaux tels qu'illustrés en figure 3.

L'invention concerne donc la réception d'un signal AMRF formé d'un multiplex de fréquences porteuses émises par plusieurs terminaux. Comme déjà indiqué, l'invention peut s'appliquer à tous types de canal de transmission, et à tous types de stations émettrices et/ou réceptrices.

L'exemple décrit par la suite concerne plus précisément, mais non limitativement, la réalisation d'une voie de retour. Un tel système comprend une pluralité de terminaux distants, ou stations esclaves, qui émettent vers une station de base.

Cette technique permet la réalisation de stations esclaves à faible coût, chacune d'entre elles assurant la modulation et l'émission d'une porteuse à faible débit (il est bien sûr également possible que chaque station esclave module plusieurs fréquences porteuses).

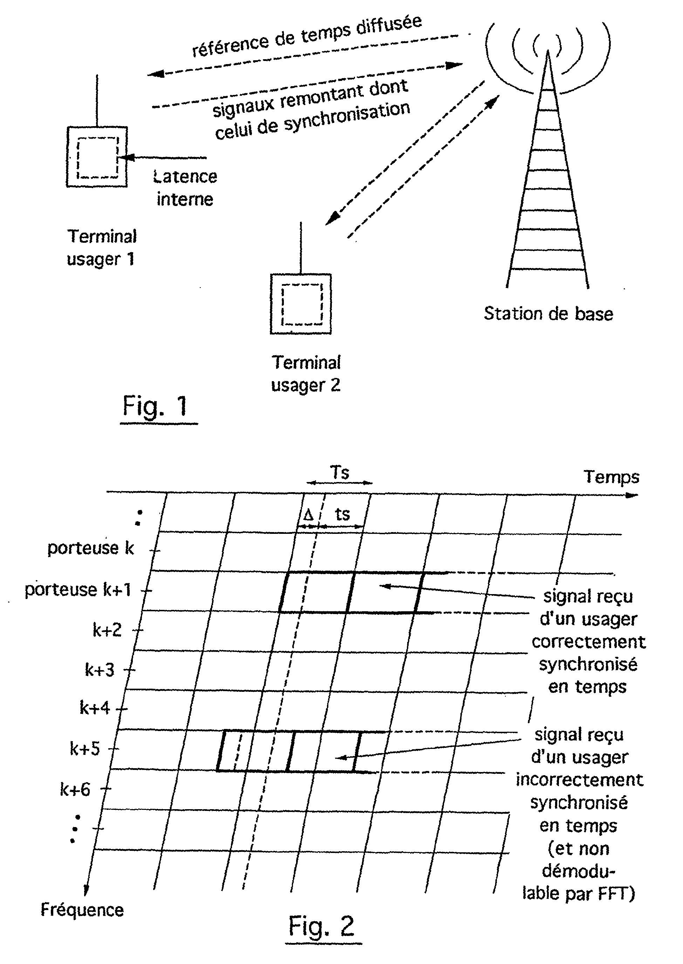

En général, les stations esclaves sont répartis sur une zone de service autour de de la station de base, à des distances terminal-station de base Di (avec Di<R, où R est le rayon de service pour le système de diffusion autour de la station de base). Les distances Di peuvent varier dans le temps (stations mobiles). Comme illustré en figure 2, le traitement de ces signaux dans la station de base n'est pas possible sans synchronisation temporelle.

La technique de l'invention a donc pour objet d'évaluer la distance entre un terminal-usager et une station de base afin de lui permettre d'ajuster sa synchronisation temporelle et au final de synchroniser l'ensemble des signaux reçus sur la station de base.

Ainsi, l'invention permet d'estimer une erreur relative de synchronisation temporelle (c'est-à-dire un étalement des synchronisations des différents terminaux) d'un terminal-usager comprise dans l'intervalle $]0, N_s.T_s]$ dans un environnement d'accès multiple AMRT, et par exemple OFDMA ou SFDMA (en anglais "Orthogonal Frequency Division Multiple Access", "Synchronous Frequency Division Multiple Access")

Avec:

$T_s = t_s + \Delta$, durée du symbole de modulation dans un système d'accès multiple de type OFDMA, avec
$t_s$ la partie utile du symbole de modulation,
$\Delta$ son intervalle de garde

Où $T_s$= (1+roll_off)/$C_s$ durée du symbole de modulation dans un système d'accès multiple de type SFDMA, avec Cs l'écart interporteuse égal à 1/$t_s$, roll-off, le facteur de "roll-off" du filtrage de la modulation dans un système d'accès multiple de type SFDMA, Et: Ns le nombre maximal de symboles de modulation, représentant l'étalement maximal des synchronisations reçues sur la station de base que l'on veut couvrir. Dans un mode de réalisation particulier, cet étalement doit supporter l'étalement maximal des délais de propagation aller-retour entre la station de base et les différents terminaux de la zone de service, ainsi que l'étalement de leurs latences internes. Dans d'autres cas, par exemple lorsque la référence de synchronisation est délivrée par une voie satellite ou par une autre station que la station de base, on peut ne considérer que la latence d'un seul sens de propagation. On se place par la suite dans le premier cas évoqué ci-dessus.

Comme cela est illustré en figure 1, on prévoit donc tout d'abord, la diffusion depuis la station de base d'une référence temporelle pour permettre aux terminaux-usager de se synchroniser dans un premier temps en aveugle, c'est-à-dire sans préjuger des différents retards de propagation ou de traitement interne qui altèrent l'homogénéité des synchronisations.

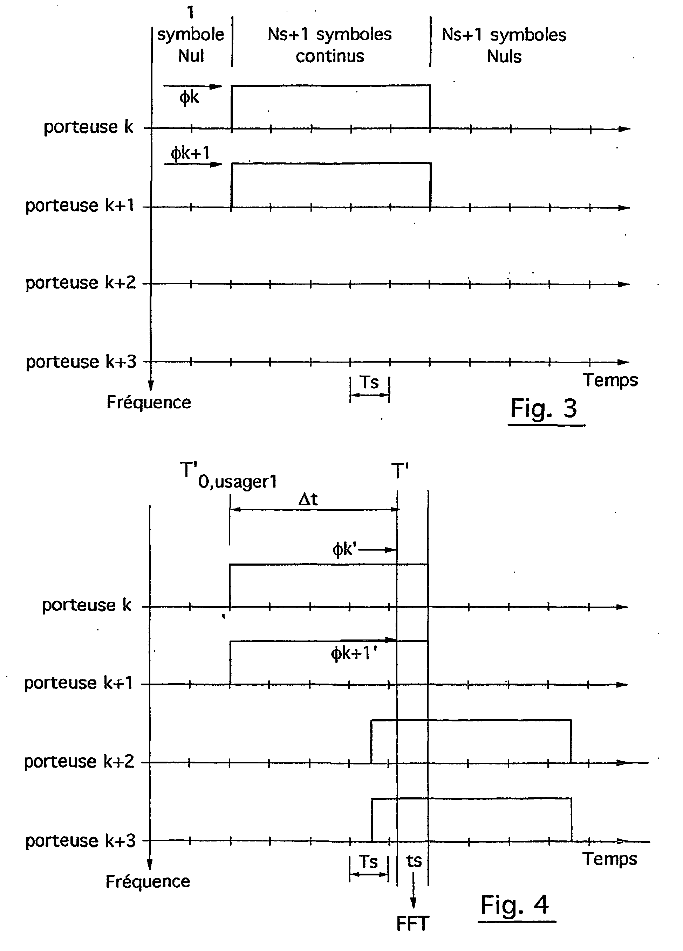

Le signal de synchronisation temporelle émis par un terminal d'émission de l'usager est illustré en figure 3. Il repose sur l'émission depuis le terminal de l'usager d'un signal composé au moins de deux porteuses adjacentes, déphasées à l'origine d'une valeur déterministe puis continues sur une durée de (Ns+1) symboles Ts.

Le déphasage déterministe entre ces deux porteuses d'ordre (k+1) et (k) est noté :

$$\Delta\phi init = \phi_{k+1} - \phi_k$$

La justification mathématique correspondante est présentée en annexe.

L'émission de ces porteuses continues doit préférentiellement être précédée d'au moins une durée symbole Ts sans émission (1 Symbole Nul)et suivie d'une durée d'au moins (Ns+1) symboles sans émission (Ns+1 Symboles Nuls).

L'emplacement des porteuses de synchronisation temporelle est défini par les règles d'allocation des porteuses dans le multiplex O/SFDMA - il peut éventuellement être choisi aléatoirement parmi un jeu de couples de porteuses réservés à cette fin.

Le mécanisme correspondant de réception du signal de synchronisation en station de base est illustré par la figure 4, dans le cas de la réception des signaux de synchronisation, émanant ici de deux terminaux différents.

En réception, la différence de phase supplémentaire entre les deux porteuses émises, $\Delta\phi$'extra, mesurée à l'instant T', choisi de manière optimale tel qu'il permet de recevoir et de démoduler simultanément l'ensemble des différents signaux de synchronisation (par FFT, par exemple), est directement proportionnelle à la durée $\Delta t$ écoulée depuis la réception de l'origine T'$_{0,usager1}$ (transition Symbole Nul -> Porteuse continûment émise) du signal de synchronisation temporelle et donc fonction linéaire ( à une ambiguïté près venant de la périodicité de cette fonction) à la somme des retards provenant à la fois du temps de propagation aller-retour entre la station de base et le terminal-usager et les retards internes du terminal.

$$\Delta\phi'extra = \phi_{k+1}' - \phi_k' - \Delta\phi init = \phi_{k+1}' - \phi_k' - (\phi_{k+1} - \phi_k) = 2\pi \Delta t / t_s$$

A l'ambiguïté près, une table associant en entrée l'expression complexe de la variation de phase (après multiplication par exemple du signal reçu porté par la porteuse k+1 par le conjugué de celui de la porteuse k) et en sortie la valeur angulaire de la phase et/ou de $\Delta t$ autorise une mise en oeuvre peu complexe de cette mesure.

L'ambiguïté à lever est +/- n. $t_s$.

Dans le cas où les porteuses ne seraient pas adjacentes (porteuses k et k+K), on aurait:

$$\Delta\phi'extra = \phi_{k+K}' - \phi_k' - \Delta\phi init = \phi_{k+1}' - \phi_k' - (\phi_{k+1} - \phi_k) = 2\pi K\Delta t / t_s$$

Dans ce cas, l'ambiguïté à lever est +/- n. $t_s$/K.

Le mécanisme pour la lever inclut une mesure des puissances reçues par FFT successives, décalées de Ts, afin de détecter une transition grossière Symbole Nul-> Porteuse modulée puis Porteuse Modulée->Symbole Nul.

Si nécessaire, le même signal de synchronisation doit être retransmis plusieurs fois afin de réduire le bruit de mesure.

Enfin, pour compléter le mécanisme de synchronisation temporelle, une signalisation de recadrage des synchros individuelles des terminaux doit redescendre par le biais d'un canal descendant.

La même méthode de génération de signal peut être élargie par l'émission de séquences de signaux (consécutivement sur l'axe des temps ou simultanément sur des porteuses adjacentes) en introduisant une modulation (différentielle ou cohérente) afin de transmettre des données ; cela à des fins d'amélioration de la technique de synchronisation ( par identification par exemple de l'usager) ou de transmission de données sans recherche d'ajustement des synchronisations ni d'efficacité spectrale.

L'invention propose donc notamment :

1) La définition du signal de synchronisation et l'adaptation de sa longueur aux contraintes du système d'accès multiple ;

2) L'émission d'un signal de synchronisation sur des porteuses adjacentes afin de se placer dans un environnement de canal " cohérent " d'une porteuse à l'autre ;

3) Le moyen de lever l'ambiguïté de la mesure par la détection des transitions symbole Nul<->porteuse modulée ;

4) Une synchronisation optimisée ;

5) La transmission de données malgré les disparités dans les délais de propagation et de traitement en cherchant un ajustement temporel ou non ;

6) La réalisation concrète de la mesure en station de base, à partir d'une table d'association entre la valeur complexe de la rotation entre les deux porteuses adjacentes et la valeur angulaire ou son équivalent en temps.

**ANNEXE**

**1. rappel : propriété des transformées de Laplace : translation de l'axe du temps**

$$L\big[f(t-a)\big] = e^{-as}L\big[f(t)\big]$$

$$s = j2\pi f$$

**2. application à l'invention**

Pour chacune des deux porteuses considérées, on a :

$$L\Big[e^{2j\pi k/t_s.(t+a)}\Big] = e^{2j\pi ka/t_s}L\Big[e^{2j\pi kt/t_s}\Big]$$

$$L\Big[e^{2j\pi(k+1)/t_s.(t+a)}\Big] = e^{2j\pi(ka+a)/t_s}L\Big[e^{2j\pi(k+1)t/t_s}\Big]$$

La différence des rotations de phase supplémentaires entraînées par le retard (+/-) s'exprime par la valeur complexe :

$$e^{i\Delta\phi_{extra}} = e^{2j\pi(ka+a)/t_s} * e^{-2j\pi ka/t_s}$$

$$= e^{2j\pi a/t_s}$$

De cette valeur on extrait la partie réelle Re(.) et la partie imaginaire Im(.), qui alimente une table, dont la sortie délivre par exemple $\Delta t$, le retard à appliquer pour le terminal considéré.

**Revendications**

1. Signal AMRF, formé d'un multiplex de fréquences porteuses émises par au moins deux terminaux distincts (1, 2) et destinées à être traitées sous la forme d'un signal unique dans une station de base, **caractérisé en ce qu'**il comprend successivement, pour au moins certains desdits terminaux (1, 2) :

    - des informations de synchronisation temporelle comprenant au moins deux desdites fréquences porteuses (k, k+1) portant chacune une valeur déterministe de phase, émise simultanément et en continu pendant une durée supérieure ou égale à deux temps symbole ; et
    - au moins un symbole nul, après lesdites informations de synchronisation temporelle,

    et **en ce que** lesdites porteuses (k, k+1) portent, simultanément à ladite valeur déterministe de phase, des données utiles, sous la forme d'une modulation conservant les propriétés de phase et de mise en forme nécessaires à la synchronisation.

2. Signal selon la revendication 1, **caractérisé en ce qu'**il comprend au moins deux symboles nuls après lesdites informations de synchronisation temporelle.

3. Signal selon l'une quelconque des revendications 1 et 2, **caractérisé en ce qu'**il comprend au moins un symbole nul avant lesdites informations de synchronisation temporelle.

4. Signal selon la revendication 3, **caractérisé en ce qu'**il comprend un symbole nul avant lesdites informations de synchronisation temporelle.

5. Signal selon l'une quelconque des revendications 1 à 4, **caractérisé en ce que** ladite durée vaut (Ns+1)Ts, où :

    - Ts est la durée d'un symbole dudit signal ;
    - Ns est un entier non nul correspondant au nombre de symboles nécessaires pour couvrir un étalement prédéterminé, contre lequel on veut lutter.

6. Signal selon la revendication 5, **caractérisé en ce qu'**il comprend au moins Ns+1 symboles nuls après lesdites informations de synchronisation temporelle.

7. Signal selon l'une quelconque des revendications 1 à 6, **caractérisé en ce que** ladite durée prédéterminée tient compte d'au moins un des trois étalements suivants ou d'une de leurs combinaisons :

    - l'étalement maximal du délai de propagation aller des signaux entre ladite station de base et lesdits terminaux ;
    - l'étalement maximal du délai de propagation retour des signaux entre lesdits terminaux et ladite station de base ;
    - la latence interne maximale desdits terminaux.

8. Signal selon l'une quelconque des revendications 1 à 7, **caractérisé en ce que** les fréquences porteuses portant lesdites valeurs déterministes appartiennent à une plage cohérente du canal de transmission dans lequel ledit signal est transmis.

9. Signal selon la revendication 8, **caractérisé en ce que** lesdites fréquences porteuses portant lesdites valeurs déterministes sont adjacentes.

10. Signal selon l'une quelconque des revendications 1 à 9, **caractérisé en ce qu'**il est modulé selon la technique OFDMA ou la technique SFDMA.

11. Station de base prévue pour recevoir un signal selon l'une quelconque des revendications 1 à 10, ledit signal comprenant successivement, pour au moins certains desdits terminaux (1,2):

    - des informations de synchronisation temporelle comprenant au moins deux desdites fréquences porteuses (k, k+1) portant chacune une valeur déterministe de phase, émise simultanément et en continu pendant une durée supérieure ou égale à deux temps symbole ; et
    - au moins un symbole nul, après lesdites informations de synchronisation temporelle,
    **caractérisée en ce qu'**elle comprend des moyens de calcul d'une information représentative d'un retard,

éventuellement positif, négatif ou nul, pour au moins un desdits terminaux, à partir d'une analyse desdites valeurs déterministes telles que reçues par ladite station de base.

**12.** Station de base selon la revendication 11, **caractérisée en ce que** lesdits moyens de calcul déterminent la différence de phase entre les fréquences porteuses (k, k+1) portant ladite valeur déterministe, et y associe ladite information représentative d'un retard.

**13.** Station de base selon la revendication 12, **caractérisée en ce que** ladite différence de phase est calculée de la façon suivante :

$$\Delta\phi'extra = \phi_{k+K}' - \phi_k' - \dot{\Delta}\phi init = \phi_{k+1}' - \phi_k' - (\phi_{k+K} - \phi_k) = 2\pi K \Delta t / t_s$$

où : $\phi'_{k+K}$ et $\phi'_k$ sont les phases reçues des porteuses k+K et k,
K-1 est le nombre de porteuses séparant les porteuses portant lesdites valeurs déterministes,
$\Delta\phi init$ est le déphasage déterministe à l'origine entre lesdites porteuses portant lesdites valeurs déterministes,
$\phi_{k+K}$ et $\phi_{k+1}$ sont les phases déterministes desdites porteuses portant lesdites valeurs déterministes,
$\Delta t$ est ledit retard,
$t_s$ est la durée utile d'un symbole de modulation.

**14.** Station de base selon l'une quelconque des revendications 12 et 13, **caractérisée en ce que** l'association à ladite différence de phase à ladite information représentative d'un retard est réalisé à l'aide d'une table de concordance stockée en mémoire.

**15.** Station de base selon l'une quelconque des revendications 12 à 14, **caractérisée en ce que** ladite information représentative d'un retard comprend une valeur angulaire de phase et/ou un retard temporel.

**16.** Station de base selon l'une quelconque des revendications 11 à 15, **caractérisée en ce qu'**elle comprend des moyens de levée de l'ambiguïté due à la périodicité de la fonction considérée, par analyse de transitions entre lesdites valeurs déterministes et le symbole nul précédant et/ou suivant entre lesdites valeurs déterministes.

**17.** Station de base selon l'une quelconque des revendications 11 à 16, **caractérisée en ce qu'**elle comprend des moyens de transmission de ladite information représentative d'un retard vers le terminal correspondant.

**18.** Station de base selon l'une quelconque des revendications 11 à 17, **caractérisée en ce qu'**elle comprend des moyens d'émission préalable, vers lesdits terminaux, d'une référence de temps.

**19.** Terminal d'un système d'accès multiples, **caractérisé en ce qu'**il comprend des moyens de modulation et de transmission d'au moins deux fréquences porteuses (k, k+1) portant des informations de synchronisation temporelle et d'au moins un symbole nul d'un signal selon l'une quelconque des revendications 1 à 10, ledit signal comprenant successivement, pour au moins certains desdits terminaux (1, 2) :

- des informations de synchronisation temporelle comprenant au moins deux desdites fréquences porteuses (k, k+1) portant chacune une valeur déterministe de phase, émise simultanément et en continu pendant une durée supérieure ou égale à deux temps symbole ; et
- au moins un symbole nul, après lesdites informations de synchronisation temporelle,
et **en ce que** lesdites porteuses (k, k+1) portent, simultanément à ladite valeur déterministe de phase, des données utiles, sous la forme d'une modulation conservant les propriétés de phase et de mise en forme nécessaires à la synchronisation.

**20.** Système d'accès multiples permettant la transmission de données entre une pluralités de terminaux et une station de base, **caractérisé en ce que** lesdits terminaux (1, 2) et ladite station de base sont conçus pour respectivement générer et recevoir un signal selon l'une quelconque des revendications 1 à 10, ledit signal comprenant successivement, pour au moins certains desdits terminaux :

- des informations de synchronisation temporelle comprenant au moins deux desdites fréquences porteuses (k, k+1) portant chacune une valeur déterministe de phase, émise simultanément et en continu pendant une durée supérieure ou égale à deux temps symbole ; et
- au moins un symbole nul, après lesdites informations de synchronisation temporelle,

et **en ce que** lesdites porteuses (k, k+1) portent, simultanément à ladite valeur déterministe de phase, des données utiles, sous la forme d'une modulation conservant les propriétés de phase et de mise en forme nécessaires à la synchronisation.

**21.** Procédé de synchronisation d'au moins deux terminaux distincts (1, 2) d'un système d'accès multiples, produisant un signal traité comme un tout dans une station de base, **caractérisé en ce qu'**il comprend une étape d'émission, par lesdits terminaux (1, 2), et de réception, par ladite station de base, d'un signal selon l'une quelconque des revendications 1 à 10, ledit signal comprenant successivement, pour au moins certains desdits terminaux :

- des informations de synchronisation temporelle comprenant au moins deux desdites fréquences porteuses (k, k+1) portant chacune une valeur déterministe de phase, émise simultanément et en continu pendant une durée supérieure ou égale à deux temps symbole ; et
- au moins un symbole nul, après lesdites informations de synchronisation temporelle,

et **en ce que** lesdites porteuses (k, k+1) portent, simultanément à ladite valeur déterministe de phase, des données utiles, sous la forme d'une modulation conservant les propriétés de phase et de mise en forme nécessaires à la synchronisation.

**22.** Procédé de détermination d'une information représentative d'un retard, éventuellement positif, négatif ou nul, pour au moins un terminal, à partir d'un signal selon l'une quelconque des revendications 1 à 10, ledit signal comprenant successivement, pour au moins certains desdits terminaux (1, 2) :

- des informations de synchronisation temporelle comprenant au moins deux desdites fréquences porteuses (k, k+1) portant chacune une valeur déterministe de phase, émise simultanément et en continu pendant une durée supérieure ou égale à deux temps symbole ; et
- au moins un symbole nul, après lesdites informations de synchronisation temporelle,

lesdites porteuses portant (k, k+1), simultanément à ladite valeur déterministe de phase, des données utiles, sous la forme d'une modulation conservant les propriétés de phase et de mise en forme nécessaires à la synchronisation, **caractérisé en ce qu'**il comprend une étape d'analyse desdites valeurs déterministes telles que reçues par ladite station de base.

## Claims

**1.** FDMA signal, formed by a multiplex of carrier frequencies transmitted by at least two separate terminals (1, 2) and designed to be processed in the form of a single signal in a base station, **characterised in that** it comprises successively, for at least some of said terminals (1, 2):

- temporal synchronizing data comprising at least two of said carrier frequencies (k, k+1) each carrying a phase deterministic value, simultaneously and continuously transmitted for a duration greater than or equal to two symbol times; and
- at least one zero symbol after said temporal synchronizing data,

and **in that** said carriers (k, k+1) simultaneously with said phase deterministic value, carry useful data in the form of a modulation conserving the phase and shaping properties necessary for synchronization.

**2.** Signal according to Claim 1, **characterized in that** it comprises two zero symbols after said temporal synchronizing data.

**3.** Signal according to one of claims 1 and 2, **characterised in that** it comprises at least one zero symbol before said temporal synchronizing data.

**4.** Signal according to Claim 3, **characterised in that** it comprises a zero symbol before said temporal synchronizing data.

**5.** Signal according to one of claims 1 to 4, **characterised in that** said duration is (Ns+1) Ts, where:

- Ts is the duration of a symbol of said signal;
- Ns is a whole non-zero integer corresponding to the number of symbols necessary to cover a predetermined spread which it is desirable to counter.

**6.** Signal according to claim 5, **characterised in that** it comprises at least Ns+1 zero symbols after said temporal synchronizing data.

**7.** Signal according to one of claims 1 to 6, **characterised in that** said predetermined duration takes into account at least one of the three following spreads or combinations thereof:

- maximum spread of forward propagation delay of signals between said base station and said terminals;
- maximum spread of return propagation delay of signals between said terminals and said base station;
- maximum internal latency of said terminals.

**8.** Signal according to one of claims 1 to 7, **characterised in that** the carrier frequencies carrying said deterministic values belong to a coherent range of the transmission channel in which said signal is transmitted.

**9.** Signal according to claim 8, **characterised in that** said carrier frequencies carrying said deterministic values are adjacent.

**10.** Signal according to one of claims 1 to 9, **characterised in that** it is modulated according to the OFDMA technique or the SFDMA technique.

**11.** Base station provided for receiving a signal according to one of claims 1 to 10, said signal comprising successively, for at least some of said terminals (1, 2):

- temporal synchronizing data comprising at least two of said carrier frequencies (k, k+1) each carrying a phase deterministic value, simultaneously and continuously transmitted for a duration greater than or equal to two symbol times; and
- at least one zero symbol after said temporal synchronizing data,
**characterised in that** it comprises means of calculating data representing a delay (positive, negative or zero) for at least one of said terminals, from analysis of said deterministic values such as are received by said base station.

**12.** Base station according to claim 11, **characterised in that** said means of calculation determines the phase difference between the carrier frequencies (k, k+1) carrying said deterministic value, and associates with it said data representing a delay.

**13.** Base station according to claim 12, **characterised in that** said phase difference is calculated in the following manner:

$$\Delta\phi'\,\mathrm{extra} = \phi_{k+K}' - \phi_{k}' - \Delta\phi\,\mathrm{init} = \phi_{k+1}' - \phi_{k}' - (\phi_{k+K} - \phi_{k}) = 2\pi K \Delta t / t_{s}$$

where:

= $\phi'_{k+K}$ and $\phi'_{k}$ are the phases received from the carriers k+K and k,
K-1 is the number of carriers separating the carriers bearing said deterministic values,
$\Delta\phi$init is the deterministic dephasing originally between said carriers bearing said deterministic values,
$\phi_{k+K}$ and $\phi_{k+1}$ are the said deterministic carrier phases bearing said deterministic values,
$\Delta t$ is the said delay,
$t_{s}$ is the useful duration of a modulation symbol.

**14.** Base station according to one of claims 12 and 13, **characterised in that** the association of said phase difference with said data representing a delay is implemented by means of a concordance table stored in the memory.

**15.** Base station according to one of claims 12 to 14, **characterised in that** said data representing a delay comprises an angular phase value and/or a temporal delay.

**16.** Base station according to one of claims 11 to 15, **characterised in that** it comprises means of removing the ambiguity due to the periodicity of the function considered, by analyzing transitions between said deterministic values and the preceding and/or subsequent zero symbol between said deterministic values.

**17.** Base station according to one of claims 11 to 16, **characterised in that** it comprises means of transmitting said data representing a delay to the corresponding terminal.

**18.** Base station according to one of claims 11 to 17, **characterised in that** it comprises means for prior transmission of a time reference to said terminals.

**19.** Terminal of a multiple access system, **characterised in that** it comprises means of modulating and transmitting at least two carrier frequencies (k, k+1) carrying temporal synchronization data and at least one zero symbol of a signal according to one of claims 1 to 10, said signal successively comprising, for at least some of said terminals (1,2):

- temporal synchronizing data comprising at least two of said carrier frequencies (k, k+1) each carrying a phase deterministic value, simultaneously and continuously transmitted for a duration greater than or equal to two symbol times; and
- at least one zero symbol after said temporal synchronizing data,
and **in that** said carriers (k, k+1), simultaneously with their phase deterministic value, carry useful data in the form of a modulation conserving the phase and shaping properties necessary for synchronization.

**20.** Multiple access system permitting the transmission of data between a plurality of terminals and a base station, **characterised in that** said terminals (1,2) and said base station are designed respectively to generate and to receive a signal according to one of claims 1 to 10, said signal successively comprising, for at least some of said terminals:

- temporal synchronizing data comprising at least two of said carrier frequencies (k, k+1) each carrying a phase deterministic value, simultaneously and continuously transmitted for a duration greater than or equal to two symbol times; and
- at least one zero symbol after said temporal synchronizing data,
and **in that** said carriers (k, k+1), simultaneously with said phase deterministic value, carry useful data in the form of a modulation conserving the phase and shaping properties necessary for synchronization.

**21.** Method of synchronizing at least two separate terminals (1,2) of a multiple access system, producing a signal processed as a whole in a base station, **characterised in that** it comprises a transmission stage, via said terminals (1,2), and a reception stage, via said base station, of a signal according to one of claims 1 to 10, said signal successively comprising, for at least some of said terminals:

- temporal synchronizing data comprising at least two of said carrier frequencies (k, k+1) each carrying a phase deterministic value, simultaneously and continuously transmitted for a duration greater than or equal to two symbol times; and
- at least one zero symbol after said temporal synchronizing data,

and **in that** said carriers (k, k+1), simultaneously with said phase deterministic value, carry useful data in the form of a modulation conserving the phase and shaping properties necessary for synchronization.

**22.** Method of determining data representing a delay (positive, negative or zero), for at least one terminal, from a signal according to one of claims 1 to 10, said signal successively comprising, for at least some of said terminals (1,2):

- temporal synchronizing data comprising at least two of said carrier frequencies (k, k+1) each carrying a phase deterministic value, simultaneously and continuously transmitted for a duration greater than or equal to two symbol times; and
- at least one zero symbol after said temporal synchronizing data,
wherein said carriers (k, k+1), simultaneously with said phase deterministic value, carry useful data in the form of a modulation conserving the phase and shaping properties necessary for synchronization,

**characterised in that** it comprises a stage for analyzing said deterministic values such as are received by said base station.

**Patentansprüche**

1. Frequenzmultiplexsignal (frz.: Signal AMRF), geformt aus einem Multiplex von Trägerfrequenzen, die von mindestens zwei separaten Endgeräten (1, 2) gesendet werden und dazu bestimmt sind, in einer Basisstation in Form eines Einzelsignals verarbeitet zu werden,
**dadurch gekennzeichnet, dass** es für mindestens einige dieser Endgeräte (1, 2) aufeinanderfolgend aufweist:

- Zeitsynchronisationsinformationen mit mindestens zwei dieser Trägerfrequenzen (k, k+1), die jede einen deterministischen Phasenwert tragen, der simultan und kontinuierlich während einer Dauer gesendet wird, die größer oder gleich zwei Symbolzeiten ist; und
- **mindestens ein Nullsymbol nach diesen** Zeitsynchronisationsinformationen,

und **dadurch**, dass diese Trägerfrequenzen (k, k+1) gleichzeitig mit diesem deterministischen Phasenwert Nutzdaten in Form einer Modulation tragen, die die Phasen- und Formatierungseigenschaften, die zur Synchronisation benötigt werden, bewahrt.

2. Signal nach Anspruch 1, **dadurch gekennzeichnet, dass** es mindestens zwei Nullsymbole nach diesen Zeitsynchronisationsinformationen aufweist.

3. Signal nach einem der Ansprüche 1 und 2, **dadurch gekennzeichnet, dass** es mindestens ein Nullsymbol vor diesen Zeitsynchronisationsinformationen aufweist.

4. Signal nach Anspruch 3, **dadurch gekennzeichnet, dass** es ein Nullsymbol vor diesen Zeitsynchronisationsinformationen aufweist.

5. Signal nach einem der Ansprüche 1 bis 4, **dadurch gekennzeichnet, dass** diese Dauer (Ns+1)Ts entspricht, wobei:

- Ts die Dauer eines Symbols dieses Signals ist,
- Ns eine Ganzzahl ungleich null ist, die der Zahl der Symbole entspricht, die erforderlich ist, um eine vorbestimmte Verzögerungszeit abzudecken, die verhindert werden soll.

6. Signal nach Anspruch 5, **dadurch gekennzeichnet, dass** es nach den Zeitsynchronisationsinformationen mindestens Ns+1 Nullsymbole aufweist.

7. Signal nach einem der Ansprüche 1 bis 6, **dadurch gekennzeichnet, dass** diese vorbestimmte Dauer mindestens eine der drei folgenden Verzögerungszeiten oder eine ihrer Kombinationen berücksichtigt:

- die maximale Ausbreitungszeit der Signale von der Basisstation zu den Endgeräten hin;
- die maximale Ausbreitungszeit der Signale von den Endgeräten zurück zur Basisstation;
- die interne Latenzzeit der Endgeräte.

8. Signal nach einem der Ansprüche 1 bis 7, **dadurch gekennzeichnet, dass** die Trägerfrequenzen, die diese deterministischen Werte tragen, einem zusammenhängenden Bereich des Übertragungskanals entsprechen, in welchem das Signal übertragen wird.

9. Signal nach Anspruch 8, **dadurch gekennzeichnet, dass** die Trägerfrequenzen, die diese deterministischen Werte tragen, benachbart sind.

10. Signal nach einem der Ansprüche 1 bis 9, **dadurch gekennzeichnet, dass** es der OFDMA-Technik oder der SFMDA-Technik entsprechend moduliert wird.

11. Basisstation für den Empfang eines Signals nach einem der Ansprüche 1 bis 10, wobei dieses Signal für mindestens einige dieser Endgeräte (1, 2) aufeinanderfolgend aufweist:

- Zeitsynchronisationsinformationen mit mindestens zwei dieser Trägerfrequenzen (k, k+1), die jede einen deterministischen Phasenwert tragen, der simultan und kontinuierlich während einer Dauer gesendet wird, die größer oder gleich zwei Symbolzeiten ist; und
- **mindestens ein Nullsymbol nach diesen** Zeitsynchronisationsinformationen,

**dadurch gekennzeichnet, dass** sie Mittel aufweist, um ausgehend von einer Analyse dieser deterministischen Werte, wie sie von der Basisstation empfangen werden, für mindestens eines dieser Endgeräte einen Verzögerungswert zu berechnen, der positiv, negativ oder null sein kann.

12. Basisstation nach Anspruch 11, **dadurch gekennzeichnet, dass** diese Berechnungsmittel die Phasendifferenz zwischen den Trägerfrequenzen (k, k+1) bestimmen, die den deterministischen Wert tragen, und sie einer Verzögerungsinformation zuordnen.

13. Basisstation nach Anspruch 12, **dadurch gekennzeichnet, dass** diese Phasendifferenz wie folgt berechnet wird:

$$\Delta\Phi'\text{extra} = \Phi_{k+K}'- \Phi_k'- \Delta\Phi\text{init} = \Phi_{k+1}'- \Phi_k' - (\Phi_{k+K} - \Phi_k) = 2\pi K\Delta t /t_s$$

wobei: $\phi_{k+K}'$ und $\phi_k'$ die Phasen sind, die von den Trägerfrequenzen k+K und k empfangen werden,

K-1 die Zahl der Trägerfrequenzen ist, die die Trägerfrequenzen trennen, die diese deterministischen Werte tragen,

$\Delta\phi$init die ursprüngliche deterministische Phasenabweichung zwischen den Trägerfrequenzen ist, die diese deterministischen Werte tragen,

$\phi_{k+K}$ und $\phi_{k+1}$ die deterministischen Phasen der Trägerfrequenzen sind, die diese deterministischen Werte tragen,

$\Delta t$ die Verzögerung ist,

$t_s$ die Nutzdauer eines Modulationssymbols ist.

14. Basisstation nach einem der Ansprüche 12 und 13, **dadurch gekennzeichnet, dass** die Zuordnung der Verzögerungsinformation zur Phasenabweichung mithilfe einer im Speicher gespeicherten Konkordanztabelle durchgeführt wird.

15. Basisstation nach einem der Ansprüche 12 bis 14, **dadurch gekennzeichnet, dass** diese Verzögerungsinformation einen Phasenwinkelwert und oder/eine Zeitverzögerung aufweist.

16. Basisstation nach einem der Ansprüche 11 bis 15, **dadurch gekennzeichnet, dass** sie Mittel aufweist, um die Mehrdeutigkeit, die auf die Periodizität dieser Funktion zurückzuführen ist, durch Analyse der Übergänge zwischen den deterministischen Werten und dem vor und/oder hinter den deterministischen Werten stehenden Nullsymbol aufzuheben.

17. Basisstation nach einem der Ansprüche 11 bis 16, **dadurch gekennzeichnet, dass** sie Mittel aufweist, um die Verzögerungsinformation zum entsprechenden Endgerät zu übertragen.

18. Basisstation nach Anspruch 11 bis 17, **dadurch gekennzeichnet, dass** sie Mittel zum vorherigen Senden einer Referenzzeit an die Endgeräte aufweist.

19. Endgerät eines Mehrfachzugriffssystems, **dadurch gekennzeichnet, dass** es Mittel zur Modulation und zur Übertragung von mindestens zwei Trägerfrequenzen (k, k+1) aufweist, die Zeitsynchronisationsinformationen und mindestens ein Nullsymbol eines Signals nach einem der Ansprüche 1 bis 10 tragen, wobei dieses Signal für mindestens einige der Endgeräte (1, 2) aufeinanderfolgend aufweist:

- Zeitsynchronisationsinformationen mit mindestens zwei dieser Trägerfrequenzen (k, k+1), die jede einen deterministischen Phasenwert tragen, der simultan und kontinuierlich während einer Dauer gesendet wird, die größer oder gleich zwei Symbolzeiten ist; und
- **mindestens ein Nullsymbol nach diesen** Zeitsynchronisationsinformationen,

und **dadurch, dass** die Trägerfrequenzen (k, k+1) gleichzeitig mit diesem deterministischen Phasenwert Nutzdaten in Form einer Modulation tragen, die die Phasen- und Formatierungseigenschaften, die zur Synchronisation benötigt werden, bewahrt.

**20.** Mehrfachzugriffssystem, das die Datenübertragung zwischen einer Vielzahl von Endgeräten und einer Basisstation erlaubt, **dadurch gekennzeichnet, dass** diese Endgeräte (1, 2) und diese Basisstation ausgelegt sind, um jeweils ein Signal nach einem der Ansprüche 1 bis 10 zu erzeugen und zu empfangen, wobei dieses Signal für mindestens einige der Endgeräte aufeinanderfolgend aufweist:

- Zeitsynchronisationsinformationen, umfassend mindestens zwei dieser Trägerfrequenzen (k, k+1), die jede einen deterministischen Phasenwert tragen, der simultan und kontinuierlich während einer Dauer gesendet wird, die größer oder gleich zwei Symbolzeiten ist; und
- **mindestens ein Nullsymbol nach** diesen Zeitsynchronisationsinformationen,
und **dadurch**, dass die Trägerfrequenzen (k, k+1) gleichzeitig mit diesem deterministischen Phasenwert Nutzdaten in Form einer Modulation tragen, die die Phasen- und Formatierungseigenschaften, die zur Synchronisation benötigt werden, bewahrt.

**21.** Verfahren zur Synchronisation mindestens zweier separater Endgeräte (1, 2) eines Mehrfachzugriffssystems, das ein Signal erzeugt, das in der Basisstation als ein Ganzes behandelt wird, **dadurch gekennzeichnet, dass** es einen Schritt des Sendens, durch diese Endgeräte (1, 2), und des Empfangens, durch diese Basisstation, eines Signals nach einem der Ansprüche 1 bis 10 aufweist, wobei dieses Signal für mindestens einige der Endgeräte aufeinanderfolgend aufweist:

- Zeitsynchronisationsinformationen mit mindestens zwei dieser Trägerfrequenzen (k, k+1), die jede einen deterministischen Phasenwert tragen, der simultan und kontinuierlich während einer Dauer gesendet wird, die größer oder gleich zwei Symbolzeiten ist; und
- mindes tens ein Nullsymbol nach diesen Zeitsynchronisationsinformationen,
und **dadurch**, dass die Trägerfrequenzen (k, k+1) gleichzeitig mit diesem deterministischen Phasenwert Nutzdaten in Form einer Modulation tragen, die die Phasen- und Formatierungseigenschaften, die zur Synchronisation benötigt werden, bewahrt.

**22.** Verfahren zur Bestimmung einer Verzögerungsinformation, die positiv, negativ oder null sein kann, für mindestens ein Endgerät ausgehend von einem Signal nach einem der Ansprüche 1 bis 10, wobei dieses Signal für mindestens einige der Endgeräte aufeinanderfolgend aufweist:

- Zeitsynchronisationsinformationen mit mindestens zwei dieser Trägerfrequenzen (k, k+1), die jede einen deterministischen Phasenwert tragen, der simultan und kontinuierlich während einer Dauer gesendet wird, die größer oder gleich zwei Symbolzeiten ist; und
- mindestens ein Nullsymbol nach diesen Zeitsynchronisationsinformationen,
wobei diese Trägerfrequenzen (k, k+1) gleichzeitig mit diesem deterministischen Phasenwert Nutzdaten in Form einer Modulation tragen, die die Phasen- und Formatierungseigenschaften, die zur Synchronisation benötigt werden, bewahrt,
**dadurch gekennzeichnet, dass** es einen Schritt des Analysierens dieser deterministischen Werte aufweist, wie sie von der Basisstation empfangen werden.

EP 1 302 016 B1

référence de temps diffusée

signaux remontant dont celui de synchronisation

Latence interne

Terminal usager 1

Station de base

Terminal usager 2

## Fig. 1

Ts

Temps

Δ   ts

porteuse k

porteuse k+1

k+2

k+3

k+4

k+5

k+6

Fréquence

signal reçu d'un usager correctement synchronisé en temps

signal reçu d'un usager incorrectement synchronisé en temps (et non démodulable par FFT)

## Fig. 2

Fig. 3

Fig. 4

**EP 1 302 016 B1**

## RÉFÉRENCES CITÉES DANS LA DESCRIPTION

**Documents brevets cités dans la description**

- FR 9310339
- US 5933454 A

- FR 9610670

**Littérature non-brevet citée dans la description**

- **wahlquist M.** Time synchronization in the uplink of an OFDM system. *IEEE 46th vehicular technology conference*